# EUROPÄISCHE PATENTSCHRIFT

(11) **EP 4 384 739 B1**
(45) Veröffentlichungstag und Bekanntmachung des Hinweises auf die Patenterteilung: **23.04.2025**
(21) Anmeldenummer: 22762084.6
(22) Anmeldetag: 11.08.2022
(51) Int. Cl.: F16K 31/122, F16K 37/00

(54) **HUBVENTIL MIT HUBANTRIEB**
LIFT VALVE HAVING LIFT DRIVE
VANNE DE LEVAGE POURVUE D'UN ENTRAÎNEMENT DE LEVAGE

(30) Priorität: 13.08.2021 DE 102021004172
(43) Veröffentlichungstag der Anmeldung: 19.06.2024
(73) Patentinhaber: GEA Tuchenhagen GmbH, 21514 Büchen (DE)
(72) Erfinder: BURMESTER, Jens, 21493 Grambek (DE)
(74) Vertreter: Hauck Patentanwaltspartnerschaft mbB
(86) Internationale Anmeldenummer: PCT/EP2022/072503
(87) Internationale Veröffentlichungsnummer: WO 2023/017106

(56) Entgegenhaltungen:
- WO-A1-2016/146632
- US-A1- 2005 127 200
- US-A1- 2015 075 651

## Beschreibung

Die Erfindung betrifft ein Hubventil mit einem Hubantrieb nach dem Oberbegriff des ersten Anspruchs.

Hubventile mit Hubantrieben werden in Anlagen zur Herstellung von Lebensmitteln, Getränken, Medikamenten und feinchemischen Produkten sowie in der Biotechnologie eingesetzt.

Es gibt verschiedene Wege zur Einbindung des Hubventils in die Prozessanlage der vorgenannten Anwendungen. So genannte Steuerköpfe können benutzt werden. Diese steuern dann den Hubantrieb, beispielsweise durch Schaltung von Druckluft mit so genannten Pilotventilen. Die Anlagensteuerung gibt lediglich Befehle an diesen Steuerkopf. Die WO 2002/093058 A1 zeigt ein solches Beispiel.

Hubventile werden jedoch auch auf einfachere Weise unter Verzicht auf einen Steuerkopf in die Prozessanlage eingebunden.

Ein mit einer Ventilstange des Hubventils verbundener Stangenabschnitt ist aus dem Hubantrieb herausgeführt. Auf diesem Stangenabschnitt ist ein Geber angeordnet, der einen Messaufnehmer auslöst. Um die zwei Stellungen des Stangenabschnitts, die beispielsweise mit der Offen- und der Schließstellung des Hubventils korrespondieren, bestimmen zu können, sind zwei Messaufnehmer vorgesehen. Die Ansteuerung des Hubantriebes, beispielsweise mit Druckluft, erfolgt über ein entsprechend gestaltetes Gerät der Prozessanlage.

Bei Verwendung eines Steuerkopfes sind die Messaufnehmer oftmals innerhalb des Steuerkopfes angeordnet. Dadurch sind sie mechanisch geschützt. Bei der einfacheren Lösung besteht die Gefahr, dass die Messaufnehmer verstellt werden. Im schlimmsten Fall kann es sogar zu einem Abscheren eines Teils des Messaufnehmers kommen. Außerdem ist bei dieser Anordnung zu verhindern, dass ein Körperteil, beispielsweise ein Finger, des Bedienpersonals oder Gegenstände zwischen Geber und Messaufnehmer gelangt.

Diese Gefahren wurden bisher durch zusätzliche Bauteile beseitigt, beispielsweise durch einen zusätzlichen Zylinder, der wenigstens die Stange umgibt. Zusätzliche Bauteile benötigen jedoch auch zusätzlichen Bauraum.

Ein Hubventil mit einer Messeinrichtung zur Erkennung der Position einer Hubstange ist beispielsweise aus GB 2194648 A bekannt.

US 2005/127200 A1 betrifft ein Ventilsystem, das eine Ventilanordnung, einen Aktuator zum Betätigen der Ventilanordnung und eine Ventilpositionserfassungseinheit zum Überwachen der Position der Ventilanordnung umfasst. Der Aktuator weist ein Gehäuse und eine durch das Gehäuse verlaufende Welle auf. Die Ventilpositionserfassungseinheit weist einen Geber mit einem Bewegungsbereich auf, der sich in das Gehäuse des Aktuators erstreckt. Dies soll zu einem Ventilsystem mit niedrigem Profil führen.

WO 2016/146632 A1 betrifft ein Hubventil mit einem Schließkörper, einem Hubantrieb einer mit dem Schließkörper verbundenen Ventilstange, einer mit der Ventilstange verbundenen Antriebsstange und einer zwischen Ventilstange und Antriebsstange vorgesehenen Drehentkopplungseinrichtung. Die Drehentkopplungseinrichtung umfasst wenigstens zwei Schalensegmente und die Antriebsstange ein Kupplungselement. Die Schalensegmente bilden einen Formschluss in Richtung der Hubbewegung mit der Ventilstange und einen Formschluss in Richtung der Hubbewegung mit dem Kupplungselement. Die Drehentkopplungseinrichtung soll zur Aufnahme großer axialer Beanspruchungen geeignet sein.

US 2015/075651 A1 betrifft eine Vorrichtung umfassend eine Spindel und mindestens eine Schaltzielanordnung bestehend aus einem Schaltziel und einem Zielring. Der Zielring weist eine Öffnung auf, die einen inneren Durchmesser aufweist, der kleiner als der äußere Durchmesser einer äußeren Oberfläche der Spindel ist. Wenn die mindestens eine Schaltzielanordnung über der Spindel installiert ist, wird durch Interferenz bewirkt, dass mindestens ein Teil des Zielrings in mindestens eine Rille/einen Zwischenraum eines Oberflächenfinishs der Spindel abgelenkt wird, um den Zielring so zu energetisieren, dass er das Oberflächenfinish der Spindel umfasst, um das Schaltziel zu sichern, wenn sich die Spindel bewegt. Das soll dafür sorgen, dass der aktivierte Zielring einen höheren Haftreibungskoeffizienten aufweist und es dennoch möglich ist, die Position der Schalterzielanordnung bei Bedarf neu zu konfigurieren.

Es war daher Aufgabe der Erfindung, ein verbessertes Hubventil mit einer Messvorrichtung zu schaffen, die kompakt bauend und sicher ist.

Gelöst wird diese Aufgabe durch ein Hubventil gemäß erstem Anspruch. Die abhängigen Ansprüche geben vorteilhafte Weiterbildungen an.

Die beanspruchte Vorrichtung geht aus von einem Hubventil mit einem Ventilgehäuse und einem Hubantrieb, welcher eine entlang einer Hubachse in eine erste und eine zweite Endstellung bewegbare Antriebsstange umfasst, und einer mit dem Hubantrieb auf einer dem Ventilgehäuse abgewandten Seite des Hubantriebs gekoppelten Messeinrichtung, welche einen ersten Messaufnehmer und einen zweiten Messaufnehmer umfasst, und mit einem ersten Geber, welcher der Bewegung der Antriebsstange folgend angeordnet ist wobei der erste Geber an einer in einem Endbereich der Antriebsstange angeordneten Sensorstange angeordnet ist.

Eine Verbesserung liegt nun darin, dass ein zweiter Geber, welcher der Bewegung der Antriebsstange folgend angeordnet ist, vorgesehen ist und der erste Messaufnehmer zwischen zweitem Messaufnehmer und Hubantrieb angeordnet ist und der erste Messaufnehmer von dem zweiten Geber, welcher auf einer der Antriebsstange zugewandten Seite des ersten Gebers angeordnet ist, erregt wird, wenn sich die Antriebsstange in der zweiten Endstellung befindet. Verschiedene Wirkprinzipien sind für Messaufnehmer und Geber im Stand der Technik bekannt, beispielsweise mechanische Schalter. Weniger fehleranfällig ist es, ein berührungsloses Messprinzip zu wählen. Kostengünstig ist es, die Messaufnehmer als Näherungsinitiatoren zu gestalten, die auf metallische Geber ansprechen.

Mit dem hier in Anspruch 1 vorgestellten Aufbau spricht der näher am Hubantrieb gelegene Messaufnehmer auf einen Geber an, wenn die Antriebsstange am weitesten in Richtung der Messaufnehmer verschoben ist. Diese Umkehr des Messprinzips ermöglicht es, einen der Geber in den Hubantrieb, zumindest in einen Kupplungsbereich von Hubantrieb und Messeinrichtung, eintauchen zu lassen und die Messaufnehmer mit weniger als vollem Hubabstand anzuordnen. Der Aufbau nach Anspruch 1 ermöglicht eine wesentlich kompaktere und sicherere Anordnung mit Hubventil, Hubantrieb und Messeinrichtung. Die kompaktere Anordnung bringt Sicherheit gegen mechanische Beeinträchtigung und Eintrag von Störpartikeln in die Messeinrichtung.

In einer ersten Weiterbildung wird die Störanfälligkeit durch Gegenstände zwischen Messaufnehmer und Geber weiter verbessert, indem Sensorstange, erster Geber und zweiter Geber bündige Mantelflächen aufweisen. Die bündigen Mantelflächen wirken in dem Anwendungsfeld wie eine zusammenhängende glatte Zylinderfläche. Insbesondere verhindert dies ein Abscheren eines Messaufnehmers durch einen Geber oder ein von einem Geber bewegten Partikel.

Die mechanische Stabilität und damit Sicherheit kann in einer Weiterbildung erhöht werden, indem der erste Geber einstückig mit der Sensorstange ausgeführt ist. Dieser Vorteil wird weiter vertieft, wenn alternativ oder zusätzlich der zweite Geber einstückig mit der Antriebsstange ausgeführt ist. Die einstückige Ausführung kann dabei soweit gehen, dass der Geber unauffällig ist, beispielsweise nur ein Absatz oder eine Stufe.

Den Eintrag von Gegenständen oder Partikeln in die Messeinrichtung verringert wird gemäß einer Weiterbildung verhindert, indem die Messeinrichtung auf einer dem Hubantrieb abgewandten Stirnseite mit einem Deckel verschlossen ist. Dies kann ein flacher Deckel oder eine domartige, haubenartige Struktur sein. Eine abgerundete Ausführung ist hygienisch vorteilhafter, da verschmutzungsanfällige Ecken und Knicke verringert werden.

Die Ausführung mit einem Deckel kann zusätzlich dadurch verbessert werden, dass die Sensorstange verschiebbar und gedichtet in dem Deckel aufgenommen ist, der Deckel einen Luftanschluss aufweist und in der Sensorstange ein Luftkanal ausgebildet ist. Bei druckmittelbetriebenen Hubantrieben, deren Druckmittel über die Antriebsstange zugeführt wird, bietet die Ausführung gemäß dieser Weiterbildung einen kompakten und sicheren Aufbau der Druckmittelzufuhr.

Eine besonders kompakte Bauweise ist gemäß einer Weiterbildung erreicht, indem Hubantrieb und Messeinrichtung in einem Kupplungsbereich miteinander verbunden sind und sich der zweite Geber in der ersten Endstellung auf Höhe des Kupplungsbereichs befindet.

Die Sicherheit wird durch eine Verringerung des Eintrags von Partikeln in die Messvorrichtung und insbesondere in den Raum zwischen Messaufnehmern und Gebern erhöht, indem die Messeinrichtung eine Hohlstange umfasst, die die Sensorstange vollumfänglich umschließt.

Eine sichere und zuverlässige Funktion der Messeinrichtung hängt auch von der genauen Einstellung der Messaufnehmer ab, so dass diese zuverlässig zum richtigen Zeitpunkt von einem Geber aktiviert werden. Dies wird gemäß Weiterbildung erreicht, indem der erste Messaufnehmer in einem ersten Langloch und der zweite Messaufnehmer in einem zweiten Langloch aufgenommen ist.

Das Hubventil wird kostengünstig durch vereinfachte Montage, indem gemäß Weiterbildung die Antriebsstange mit einer Ventilstange des Hubventils koppelbar ist.

Weitere Montagevereinfachungen ergeben sich, wenn die Antriebsstange mit der Sensorstange verbindbar, insbesondere mittels Verschraubung verbindbar, ausgeführt ist.

Anhand eines Ausführungsbeispiels sollen die Erfindung erläutert und die Darstellung ihrer Vorteile vertieft werden. Es zeigen:
- **Fig. 1:**: Schnitt durch ein Hubventil mit Hubantrieb und Messeinrichtung in einer schematischen Darstellung;
- **Fig. 2:**: Schnitt entlang der Hubachse durch den Hubantrieb und die Messeinrichtung, wobei sich der Hubantrieb in einer ersten Endstellung befindet;
- **Fig. 3:**: Schnitt entlang der Hubachse durch den Hubantrieb und die Messeinrichtung, wobei sich der Hubantrieb in einer zweiten Endstellung befindet.

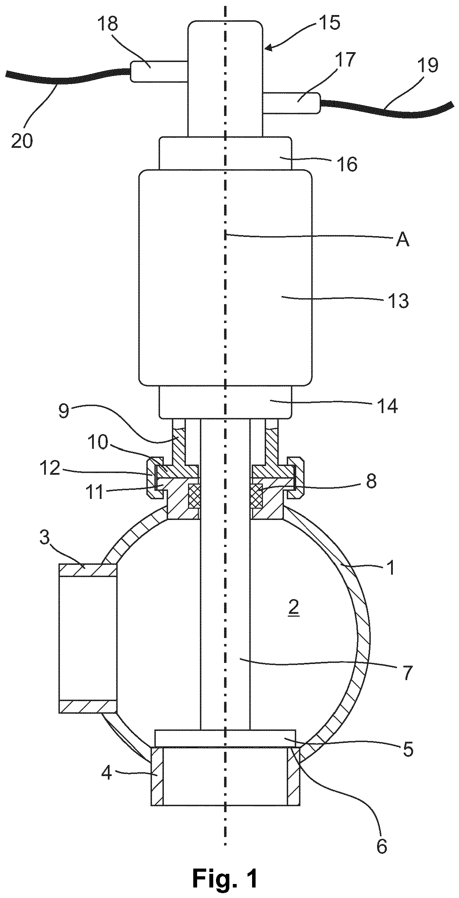

In Fig. 1 ist ein Hubventil in einer teilgeschnittenen Ansicht dargestellt.

Das Hubventil besitzt ein Ventilgehäuse 1 mit einem zur Fluidaufnahme gestalteten Innenraum 2. Am Ventilgehäuse 1 sind ein erster Anschluss 3 und ein zweiter Anschluss 4 vorgesehen, welche durch den Innenraum 2 miteinander fluidverbunden sind. Die Fluidverbindung ist schaltbar. Hierzu ist ein Schließkörper 5 vorgesehen, der entlang einer Hubachse A verstellbar ist. Der Schließkörper 5 ist in dichtenden Kontakt mit einem Ventilsitz 6 bringbar, welcher am Ventilgehäuse 1 vorgesehen ist.

Bei dichtendem Kontakt von Schließkörper 5 und Ventilsitz 6 ist die Fluidverbindung zwischen erstem Anschluss 3 und zweitem Anschluss 4 unterbrochen.

Der Schließkörper 5 befindet sich an einer Ventilstange 7 und kann mit dieser einteilig ausgeführt sein. Die Ventilstange 7 durchsetzt eine im Ventilgehäuse 1 vorgesehene Dichtung 8, die als kombinierte Lagerung und Dichtung ausgeführt sein kann, und ragt auf diese Weise aus dem Ventilgehäuse 1 heraus.

An dem Ventilgehäuse 1 kann eine Laterne 9 lösbar befestigt sein. Für diese lösbare Verbindung kann die Laterne 9 einen Laternenflansch 10 besitzen, welcher in Kontakt mit einem Gehäuseflansch 11 bringbar ist. Die Flansche 9 und 10 können mit einer Klammer 12 lösbar sowie kraft- und formschlüssig miteinander verbunden sein.

Mit der Laterne 9 ist ein Hubantrieb 13 verbunden, welcher auch unter Verzicht auf eine Laterne direkt an das Ventilgehäuse 1 gekoppelt sein kann. Hubantrieb 13 und Laterne 9 sind mit einer ersten Kupplung 14 miteinander verbunden. Vorzugsweise ist die erste Kupplung 14 lösbar ausgeführt, beispielsweise in Form einer geklammerten Flanschverbindung, wie sie anhand Laterne 9 und Ventilgehäuse 1 beschrieben wurde.

Auf einer dem Ventilgehäuse 1 gegenüberliegenden Seite des Hubantriebs ist eine Messeinrichtung 15 angeordnet. Hubantrieb 13 und Messeinrichtung 15 sind vorzugsweise lösbar miteinander gekoppelt. Die Verbindung wird mit einer zweiten Kupplung 16 bewirkt. Diese zweite Kupplung 16 kann als Klammerflanschverbindung, Schraubverbindung oder ähnliches gestaltet sein. Die zweite Kupplung 16 bildet einen räumlichen Teil, der hier als Kupplungsbereich bezeichnet wird.

Die Messeinrichtung 15 umfasst einen ersten Messaufnehmer 17 und einen zweiten Messaufnehmer 18. Der zweite Messaufnehmer 18 ist auf einer dem Hubantrieb 13 abgewandten Seite des ersten Messaunehmers 17 angeordnet. Eine erste Messleitung 19 verbindet den ersten Messaufnehmer 17 mit einem Gerät einer Prozessanlage. Eine zweite Messleitung 20 verbindet den zweiten Messaufnehmer 18 mit einem Gerät der Prozessanlage.

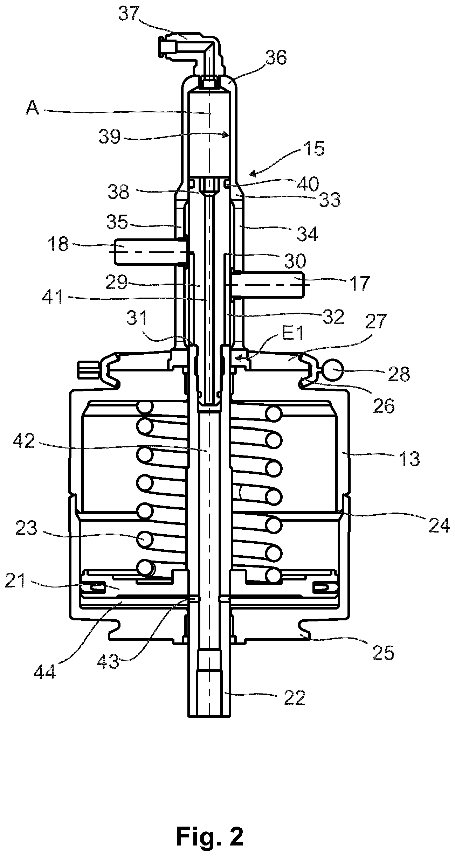

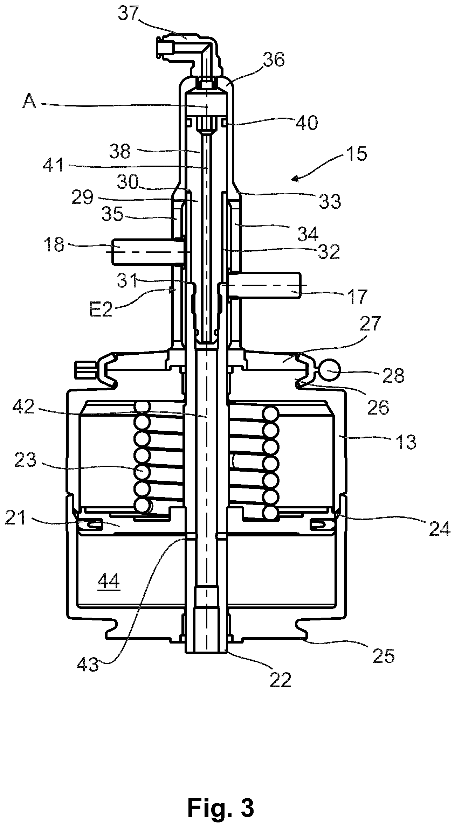

Hubantrieb 13 und Messeinrichtung 15 sind in Fig. 2 und Fig. 3 im Schnitt entlang der Hubachse A gezeigt.

Der Hubantrieb 13 ist druckmittelbetreibbar ausgeführt und umfasst einen Kolben 21, der entlang der Hubachse A beweglich ist und mit einer Antriebsstange 22 zusammenwirkt, insbesondere diese bei seiner Bewegung mitnimmt. Die Antriebsstange 22 ist mit der Ventilstange 7 in einer zur Kraftübertragung in Richtung der Hubachse A geeigneten Weise verbindbar. Verschraubungen und Kupplungen aus Halbschalen sind hierfür bekannt.

Der Kolben 21 kann in einer seiner Bewegungsrichtungen entlang der Hubachse H durch eine Feder 23 oder ein Federpaket vorgespannt sein. Alternativ oder zusätzlich können beide Seiten des Kolbens 21 mit Druckmittel beaufschlagbar ausgeführt sein.

Die Bewegung des Kolbens 21 in Richtung der Feder 23 wird von einem gehäuseseitig vorgesehenen Anschlag 24 begrenzt. Hierdurch wird die Position des Kolbens 21 in der in Fig. 3 dargestellten zweiten Endstellung E2 der Antriebsstange 22 festgelegt. Die in Fig. 2 gezeigte Position des Kolbens entspricht der ersten Endstellung E1 der Antriebsstange 22. Der Kolben 21 befindet sich an einem Ende des Hubes, das auf einer dem Ventilgehäuse 1 zugewandten Seite des Hubantriebs 13 liegt. In dem gezeigten Beispiel ist dies die Schließstellung des Ventils. Für diese erste Endstellung E1 kann ebenfalls ein Anschlag vorgesehen sein, beispielsweise wenn zwischen Schließkörper 5 und Ventilsitz 6 eine radiale Dichtung angeordnet ist. Alternativ kann die Position durch den in einen Kontakt mit dem Ventilsitz 6 gebrachten Schließkörper 5 festgelegt sein.

Der Hubantrieb 13 umfasst ein Bauteil, welches ein Teil der ersten Kupplung 14 bildet, die in Fig. 1 schematisch dargestellt ist. Dieses Bauteil kann als erster Flansch 25 ausgeführt sein und ist auf einer dem Ventilgehäuse 1 zugewandten Seite des Hubantriebes angeordnet.

Auf einer dem ersten Flansch 25 gegenüberliegenden Seite des Hubantriebes 13 und damit auf einer dem Ventilgehäuse 1 abgewandten Seite des Hubantriebes 13 befindet sich die zweite Kupplung 16, mit der die Messeinrichtung 15 lösbar am Hubantrieb 13 befestigt ist. Diese zweite Kupplung 15 kann einen zweiten Flansch 26, der am Hubantrieb 13 angebracht ist, und einen Gegenflansch 27 aufweisen, der an der Messeinrichtung 15 vorgesehen ist. Zweiter Flansch 26 und Gegenflansch 27 können mit einer Kupplungsklammer 28 lösbar fixiert sein.

In der Messeinrichtung 15 ist eine Sensorstange 29 entlang der Hubachse A beweglich angeordnet. Die Sensorstange 29 ist mit der Antriebsstange 22 verbindbar ausgeführt, beispielsweise mit einer Verschraubung, bei der eine der Stangen ein Außengewinde und die andere Stange eine Bohrung mit Innengewinde aufweist.

Die Sensorstange 29 umfasst einen ersten Geber 30. Erster Messaufnehmer 17, zweiter Messaufnehmer 18 und erster Geber 30 sind vorzugsweise auf einem berührungslosen Wirkprinzip beruhend ausgeführt. Die Messaufnehmer 17 und 18 können insbesondere Näherungsschalter beziehungsweise Näherungsinitiatoren sein.

Der erste Geber 30 ist vorteilhaft als ein Absatz der Sensorstange 29 gestaltet. Die Sensorstange 29 weist eine Änderung ihres Durchmessers auf, wodurch sich abhängig von der Stellung der Sensorstange 29 entlang der Hubachse ein Unterschied im Abstand zwischen einer Oberfläche der Sensorstange 29 und dem zweiten Messaufnehmer 18 ergibt. Insbesondere ändert sich dieser Abstand während des Schaltvorgangs des Hubantriebes 13, bei welchem Sensorstange 29 und erster Geber 30 mitgenommen werden. Diese Abstandsänderung bewirkt eine Erregung des zweiten Messaufnehmers 18. Die zum aktivierten Zustand des zweiten Messaufnehmers 18 gehörende Stellung der Sensorstange 29 ist in Fig. 2 gezeigt, in der sich der Hubantrieb 13 in der ersten Endstellung E1 befindet. Eine Erregung des zweites Messaufnehmers 18 bedeutet daher, dass sich der Hubantrieb 13 in der ersten Endstellung E1 befindet.

Der erster Geber 30 kann als ein zusätzliches Bauteil, beispielsweise als Ring, gestaltet sein. Vorzugsweise sind Sensorstange 29 und erster Geber 30 jedoch einstückig ausgeführt. Dies ist kostengünstiger in der Herstellung und betriebssicher, da sich die Position des ersten Gebers 30 auf der Sensorstange 29 nicht ändern kann.

Ein zweiter Geber 31 ist vorgesehen, der von der Antriebsstange 29 bei deren Bewegung entlang der Hubachse A mitgenommen wird.

Wie der erste Geber 30 kann auch der zweite Geber 31 als ein zusätzliches Bauteil, beispielsweise als Ring, gestaltet sein. Vorzugsweise ist der zweite Geber 31 jedoch einstückig mit der Antriebsstange 22 ausgeführt. Dies ist kostengünstiger in der Herstellung und betriebssicher, da sich die Position des ersten Gebers 30 auf der Sensorstange 29 nicht ändern kann. Vorzugsweise wirkt ein Ende der Antriebsstange 22 als zweiter Geber 31, indem ein Außendurchmesser der Antriebsstange 22 größer ist als ein Außendurchmesser der Sensorstange 29 und auf diese Weise ein Absatz, beziehungsweise eine Stufe, gebildet wird. Dieser Absatz erregt den Näherungsinitiator, hier speziell den ersten Messaufnehmer 17, sobald sich die Antriebsstange in der zweiten Endstellung E2 gemäß Fig. 3 befindet, denn dann befinden sich der zweite Geber 31 in Form des Absatzes und der erste Messaufnehmer 17 auf gleicher Höhe entlang der Hubachse A.

Üblich war es bisher, mit dem ersten Messaufnehmer 17 die Endstellung E1 und mit dem zweiten Messaufnehmer 18 die Endstellung E2 zu erkennen. In der hier vorgestellten Vorrichtung wird hingegen die Endstellung E1 gemäß Fig. 2 mit dem zweiten Messaufnehmer 18 detektiert, während die Endstellung E2 gemäß Fig. 3 mit dem ersten Messaufnehmer erkannt wird. Der dem Hubantrieb 13 näher gelegene Messaufnehmer misst also die Stellung, in der die Antriebsstange 22 am weitesten in Richtung Messeinrichtung 15 verschoben ist.

Ein Vorteil ist die durch diesen Aufbau mögliche Verkürzung der Anordnung aus Hubantrieb 13 und Messeinrichtung 15. Dieser ergibt sich, wenn der zweite Geber 31 in der ersten Endstellung E1 in den Bereich der zweiten Kupplung 16 bewegt ist, also auf deren axiale Höhe bezogen auf die Hubachse A. Dieser Bereich ist wegen der Kupplungsbauteile einer Messung nicht zugänglich und nur die Umkehrung der Messung macht es möglich, den zweiten Geber 31 so in der ersten Endstellung E1 zu positionieren. Ein weiterer Vorteil ist, dass die Messaufnehmer 17 und 18 nicht mehr um die Länge des Ventilhubes entlang der Hubachse A voneinander beabstandet sein müssen. Auch dies ermöglicht eine kompaktere Bauweise.

Dieses Grundprinzip lässt sich um vorteilhafte Weiterbildungen ergänzen.

Ein Futter 32 kann vorgesehen sein, welches an der Sensorstange 29 angeordnet ist. Es erstreckt in Richtung der Hubachse A zwischen erstem und zweitem Geber 30 und 31. Futter 32 und die beiden Geber 30 und 31 sind so gestaltet, dass ihre Mantelflächen bündig miteinander sind. Dies verhindert, dass einer der Geber 30 oder 31 direkt mit einem der Messaufnehmer 17 oder 18 kollidiert oder ein Partikel vom Geber 30 oder 31 gegen den Messaufnehmer 17 oder 18 gedrückt wird. Dieses Drücken oder eine Kollision kann den Messaufnehmer 17 und 18 verstellen oder sogar zerstören. Die vorgenannte Gestaltung der Mantelflächen verhindert dies. Ebenso wird durch das Futter 32 eine mögliche Gefahrenquelle durch Abscherung oder Kollision von Körperteilen verhindert. Durch den bündigen Mantelflächen des Futters 32 mit dem Geber 30 sind rein tangentiale Kontakte möglich. Das Futter 32 kann eine aufschiebbare Hülse sein oder ein angegossenes Bauteil. Das Material des Futters 32 ist so gewählt, dass es keinen der Messaufnehmer 17 und 18 erregt und die Funktionen der Geber 30 und 31 und Messaufnehmer 17 und 18 nicht beeinträchtigt.

Zwei weitere Maßnahmen verbessern, jede für sich oder beide zusammen ausgeführt, die Sicherheit der Messeinrichtung 15 gegen das Eindringen von Gegenständen in den Raum zwischen den Gebern 30 und 31 und den Messaufnehmern 17 und 18.

Eine erste Maßnahme ist es, die Messeinrichtung 15 mit einer Hohlstange 33 zu versehen. Diese erstreckt sich über eine volle Länge, die die Sensorstange 29 aus dem Hubantrieb 13 entlang der Hubachse A herausragt. Weiterhin umschließt sie die Sensorstange 29 vollständig in Umfangsrichtung.

Die Hohlstange 33 wird ist unterbrochen, um den Messaufnehmern 17 und 18 Zugang zu den Gebern 30 und 31 zu ermöglichen. Dies kann in Form eines ersten Langlochs 34, in welchem der erste Messaufnehmer 17 aufgenommen ist, und eines zweiten Langlochs 35, in welchem der zweite Messaufnehmer 18 montiert ist, geschehen. Die Langlöcher erlauben eine Positionierung und insbesondere Verschiebung der Messaufnehmer 17 und 18 entlang der Hubachse A. Vorzugweise weist die Hohlstange 33 möglichst wenige Unterbrechungen auf, beispielsweise die genannten Langlöcher 34 und 35 sowie eine Drainageöffnung, falls diese notwendig ist, und einen Luftanschluss wie er weiter unten beschrieben ist.

Eine zweite Maßnahme ist es, eine Stirnseite der Messeinrichtung 15, die sich auf einer dem Hubantrieb 13 abgewandten Seite der Messeinrichtung befindet, mit einem Deckel 36 zu verschließen. Dieser verhindert eine Kollision eines Endes der Sensorstange 29 mit Gegenständen und ein Eindringen von Gegenständen in die Messeinrichtung 15.

Die Messeinrichtung 15 kann ein einteiliges Gehäuse besitzen. An diesem können dann Hohlstange 33 und Deckel 36 ausgeformt sein. Dies ist baulich einfach und hygienisch vorteilhaft.

Die Messeinrichtung gemäß Beispiel ist so weitergebildet, dass sie eine einfache und sichere sowie kompakte Luftversorgung des Hubantriebes 13 enthält.

Der Deckel 36 besitzt einen Luftanschluss 37, der beispielsweise an einer Stirnseite angeordnet ist. Die Sensorstange 29 umfasst an einem dem Hubantrieb 13 abgewandten Ende einen Kolbenabschnitt 38, der auf einer Lauffläche 39 bewegbar ist. Eine Kolbendichtung 40 dichtet zwischen Kolbenabschnitt 38 und Lauffläche 39. Die Dichtwirkung bleibt über den gesamten Hub und damit der Bewegung zwischen erster und zweiter Endstellung E1 und E2 bestehen.

Die Sensorstange 29 wird von einem Luftkanal 41 in Richtung der Hubachse A vollständig durchsetzt.

Der Luftkanal 41 ist mit einem zweiten Luftkanal 42, welcher in Antriebsstange 22 vorgesehen ist, fluidführend verbunden. Der zweite Luftkanal 42 ist mit Hilfe eines Auslasses 43 mit einem Druckraum 44 verbunden, welcher sich auf der der Feder 23 abgewandten Seite des Kolbens 21 befindet.

Druckmittel, beispielsweise Pneumatikluft, gelangt durch den Luftanschluss 37 in den Luftkanal 41, von dort in den zweiten Luftkanal 42 und durch den Auslass 43 in den Druckraum 44 und bewirkt eine Druckbeaufschlagung des Kolbens 21. Bei entsprechend hohem Druck wird die Gegenkraft der Feder 23 überwunden, der Kolben 21 verschoben und so in der Folge das Hubventil geschaltet.

### Bezugszeichenliste

- 1: Ventilgehäuse
- 2: Innenraum
- 3: erster Anschluss
- 4: zweiter Anschluss
- 5: Schließkörper
- 6: Ventilsitz
- 7: Ventilstange
- 8: Dichtung
- 9: Laterne
- 10: Laternenflansch
- 11: Gehäuseflansch
- 12: Klammer
- 13: Hubantrieb
- 14: erste Kupplung
- 15: Messeinrichtung
- 16: zweite Kupplung
- 17: erster Messaufnehmer
- 18: zweiter Messaufnehmer
- 19: erste Messleitung
- 20: zweite Messleitung
- 21: Kolben
- 22: Antriebsstange
- 23: Feder
- 24: Anschlag
- 25: erster Flansch
- 26: zweiter Flansch
- 27: Gegenflansch
- 28: Kupplungsklammer
- 29: Sensorstange
- 30: Erster Geber
- 31: Zweiter Geber
- 32: Futter
- 33: Hohlstange
- 34: erstes Langloch
- 35: zweites Langloch
- 36: Deckel
- 37: Luftanschluss
- 38: Kolbenabschnitt
- 39: Lauffläche
- 40: Kolbendichtung
- 41: Luftkanal
- 42: zweiter Luftkanal
- 43: Auslass
- 44: Druckraum
- A: Hubachse
- E1: erste Endstellung
- E2: zweite Endstellung

## Patentansprüche

1. Hubventil mit einem Ventilgehäuse (1) und einem Hubantrieb (13), welcher eine entlang einer Hubachse (A) in eine erste und eine zweite Endstellung (E1, E2) bewegbare Antriebsstange (22) umfasst, und einer mit dem Hubantrieb (13) auf einer dem Ventilgehäuse (1) abgewandten Seite des Hubantriebs (13) gekoppelten Messeinrichtung (15), welche einen ersten Messaufnehmer (17) und einen zweiten Messaufnehmer (18) umfasst, und mit einem ersten Geber (30), welcher der Bewegung der Antriebsstange (22) folgend angeordnet ist, wobei der erste Geber (30) an einer in einem Endbereich der Antriebsstange (22) angeordneten Sensorstange (29) angeordnet ist, wobei ein zweiter Geber (31), welcher der Bewegung der Antriebsstange (22) folgend angeordnet ist, vorgesehen ist und der erste Messaufnehmer (17) zwischen zweitem Messaufnehmer (18) und Hubantrieb (13) angeordnet ist und der erste Messaufnehmer (17) von dem zweiten Geber (31), welcher auf einer der Antriebsstange (22) zugewandten Seite des ersten Gebers (30) angeordnet ist, erregt wird, wenn sich die Antriebsstange (22) in der zweiten Endstellung (E2) befindet, **dadurch gekennzeichnet, dass** der näher am Hubantrieb (13) gelegene erste Messaufnehmer (17) auf den zweiten Geber (31) anspricht, wenn die Antriebsstange (22) am weitesten in Richtung der Messaufnehmer (17, 18) verschoben ist.

2. Hubventil nach Anspruch 1, **dadurch gekennzeichnet, dass** Sensorstange (29), erster Geber (30) und zweiter Geber (31) bündige Mantelflächen aufweisen.

3. Hubventil nach Anspruch 1 oder 2, **dadurch gekennzeichnet, dass** der erste Geber (30) einstückig mit der Sensorstange (29) ausgeführt ist.

4. Hubventil nach einem der Ansprüche 1 bis 3, **dadurch gekennzeichnet, dass** der zweite Geber (31) einstückig mit der Antriebsstange (22) ausgeführt ist.

5. Hubventil nach einem der vorhergehenden Ansprüche, **dadurch gekennzeichnet, dass** die Messeinrichtung (15) auf einer dem Hubantrieb (13) abgewandten Stirnseite mit einem Deckel (36) verschlossen ist.

6. Hubventil nach Anspruch 5, **dadurch gekennzeichnet, dass** die Sensorstange (29) verschiebbar und gedichtet in dem Deckel (36) aufgenommen ist, der Deckel einen Luftanschluss (37) aufweist und in der Sensorstange (29) ein Luftkanal (41) ausgebildet ist.

7. Hubventil nach einem der vorhergehenden Ansprüche, **dadurch gekennzeichnet, dass** Hubantrieb (13) und Messeinrichtung (15) in einem Kupplungsbereich miteinander verbunden sind und sich der zweite Geber (31) in der ersten Endstellung (E1) auf Höhe des Kupplungsbereichs befindet.

8. Hubventil nach einem der vorhergehenden Ansprüche, **dadurch gekennzeichnet, dass** die Messeinrichtung (15) eine Hohlstange (33) umfasst, die die Sensorstange (29) vollumfänglich umschließt.

9. Hubventil nach einem der vorhergehenden Ansprüche, **dadurch gekennzeichnet, dass** der erste Messaufnehmer (17) in einem ersten Langloch (34) und der zweite Messaufnehmer (18) in einem zweiten Langloch (35) aufgenommen ist.

10. Hubventil nach einem der vorhergehenden Ansprüche, **dadurch gekennzeichnet, dass** die Antriebsstange (22) mit einer Ventilstange (7) des Hubventils koppelbar ist.

11. Hubventil nach einem der vorhergehenden Ansprüche, **dadurch gekennzeichnet, dass** die Antriebsstange (22) mit der Sensorstange (29) verbindbar, insbesondere mittels Verschraubung verbindbar, ausgeführt ist.

## Claims

1. A lift valve having a valve housing (1) and a lift drive (13), which comprises a drive rod (22) that is movable along a lift axis (A) into a first and a second end position (E1, E2), and a measuring apparatus (15) that is coupled to the lift drive (13) on a side of the lift drive (13) facing away from the valve housing (1) and that comprises a first measuring sensor (17) and a second measuring sensor (18), and having a first transducer (30), which is arranged so as to follow the movement of the drive rod (22), wherein the first transducer (30) is arranged on a sensor rod (29) arranged in an end region of the drive rod (22), wherein a second transducer (31), which is arranged so as to follow the movement of the drive rod (22), is provided, and the first measuring sensor (17) is arranged between the second measuring sensor (18) and the lift drive (13), and the first measuring sensor (17) is excited by the second transducer (31), which is arranged on a side of the first transducer (30) facing the drive rod (22), when the drive rod (22) is located in the second end position (E2), **characterized in that** the first measuring sensor (17), which is placed closer to the lift drive (13), responds to the second transducer (31) when the drive rod (22) is displaced the farthest in the direction of the measuring sensors (17, 18).

2. The lift valve according to claim 1, **characterized in that** the sensor rod (29), the first transducer (30), and the second transducer (31) have flush lateral surfaces.

3. The lift valve according to claim 1 or 2, **characterized in that** the first transducer (30) is designed integrally with the sensor rod (29).

4. The lift valve according to claims 1 to 3, **characterized in that** the second transducer (31) is designed integrally with the drive rod (22).

5. The lift valve according to one of the preceding claims, **characterized in that** the measuring apparatus (15) is closed with a cover (36) on an end face facing away from the lift drive (13).

6. The lift valve according to claim 5, **characterized in that** the sensor rod (29) is accommodated in the cover (36) so as to be displaceable and in a sealed manner, the cover has an air connection (37), and an air channel (41) is formed in the sensor rod (29).

7. The lift valve according to one of the preceding claims, **characterized in that** the lift drive (13) and the measuring apparatus (15) are connected to one another in a coupling region and the second transducer (31) is located in the first end position (E1) at the height of the coupling region.

8. The lift valve according to one of the preceding claims, **characterized in that** the measuring apparatus (15) comprises a hollow rod (33), which completely surrounds the sensor rod (29).

9. The lift valve according to one of the preceding claims, **characterized in that** the first measuring sensor (17) is accommodated in a first elongated hole (34) and the second measuring sensor (18) is accommodated in a second elongated hole (35).

10. The lift valve according to one of the preceding claims, **characterized in that** the drive rod (22) can be coupled to a valve rod (7) of the lift valve.

11. The lift valve according to one of the preceding claims, **characterized in that** the drive rod (22) is designed so as to be connectable, in particular by means of a screw connection, to the sensor rod (29).

## Revendications

1. Vanne de levage pourvue d'un boîtier de vanne (1) et d'un entraînement de levage (13) comportant une tige d'entraînement (22) déplaçable le long d'un axe de levage (A) vers une première et une deuxième position finale (E1, E2), et pourvue d'un dispositif de mesure (15) accouplé à l'entraînement de levage (13) sur un côté de l'entraînement de levage (13) opposé au boîtier de vanne (1), lequel comporte un premier capteur de mesure (17) et un deuxième capteur de mesure (18), et pourvue d'un premier transmetteur (30) disposé de manière à suivre le déplacement de la tige d'entraînement (22), dans laquelle le premier transmetteur (30) est disposé sur une tige de capteur (29) disposée dans une région finale de la tige d'entraînement (22), dans laquelle il est prévu un deuxième transmetteur (31) disposé de manière à suivre le déplacement de la tige d'entraînement (22) et le premier capteur de mesure (17) est disposé entre le deuxième capteur de mesure (18) et l'entraînement de levage (13) et le premier capteur de mesure (17) est activé par le deuxième transmetteur (31), lequel est disposé sur un côté du premier transmetteur (30) tourné vers la tige d'entraînement (22), lorsque la tige d'entraînement (22) se trouve dans la deuxième position finale (E2), **caractérisée en ce que** le premier capteur de mesure (17) situé plus près de l'entraînement de levage (13) réagit au deuxième transmetteur (31) lorsque la tige d'entraînement (22) est déplacée sur une distance maximale vers le capteur de mesure (17, 18).

2. Vanne de levage selon la revendication 1, **caractérisée en ce que** la tige de capteur (29), le premier transmetteur (30) et le deuxième transmetteur (31) présentent des surfaces extérieures affleurantes.

3. Vanne de levage selon la revendication 1 ou 2, **caractérisée en ce que** le premier transmetteur (30) est réalisé d'un seul tenant avec la tige de capteur (29).

4. Vanne de levage selon l'une des revendications 1 à 3, **caractérisée en ce que** le deuxième transmetteur (31) est réalisé d'un seul tenant avec la tige d'entraînement (22).

5. Vanne de levage selon l'une des revendications précédentes, **caractérisée en ce que** le dispositif de mesure (15) est fermé par un couvercle (36) sur un côté frontal opposé à l'entraînement de levage (13).

6. Vanne de levage selon la revendication 5, **caractérisée en ce que** la tige de capteur (29) est reçue de façon déplaçable et étanche dans le couvercle (36), le couvercle présente un raccord d'air (37) et un canal d'air (41) est formé dans la tige de capteur (29).

7. Vanne de levage selon l'une des revendications précédentes, **caractérisée en ce que** l'entraînement de levage (13) et le dispositif de mesure (15) sont reliés entre eux dans une région d'accouplement et le deuxième transmetteur (31) se trouve à la hauteur de la région d'accouplement dans la première position finale (E1).

8. Vanne de levage selon l'une des revendications précédentes, **caractérisée en ce que** le dispositif de mesure (15) comporte une tige creuse (33), laquelle entoure entièrement la tige de capteur (29).

9. Vanne de levage selon l'une des revendications précédentes, **caractérisée en ce que** le premier capteur de mesure (17) est reçu dans un premier trou oblong (34) et le deuxième capteur de mesure (18) est reçu dans un deuxième trou oblong (35).

10. Vanne de levage selon l'une des revendications précédentes, **caractérisée en ce que** la tige d'entraînement (22) peut être accouplée à une tige de vanne (7) de la vanne de levage.

11. Vanne de levage selon l'une des revendications précédentes, **caractérisée en ce que** la tige d'entraînement (22) est réalisée de manière à pouvoir être reliée à la tige de capteur (29), en particulier par vissage.
